# EUROPEAN PATENT SPECIFICATION

(11) **EP 1 438 667 B1**
(45) Date of publication and mention of the grant of the patent: **24.05.2006**
(21) Application number: 02789223.1
(22) Date of filing: 18.10.2002
(51) Int. Cl.: G06F 13/00

(54) **SYSTEM AND METHOD FOR CACHING DRAM USING AN EGRESS BUFFER**
SYSTEM UND VERFAHREN ZUR CACHESPEICHERUNG VON DRAM MITTELS EINES AUSGANGSBUFFERS
SYSTEME ET PROCEDE DE MISE EN ANTEMEMOIRE POUR MEMOIRE VIVE DYNAMIQUE AU MOYEN D'UNE MEMOIRE TAMPON DE SORTIE

(30) Priority: 22.10.2001 US 345315 P
(43) Date of publication of application: 21.07.2004
(73) Proprietor: SUN MICROSYSTEMS, INC., Santa Clara, California 95054 (US)
(72) Inventor: KOHN, Leslie, D., Fremont, CA 94539 (US); WONG, Michael, K., San Mateo, CA 94402 (US)
(74) Representative: Freeman, Jacqueline Carol
(86) International application number: PCT/US2002/033441
(87) International publication number: WO 2003/036485

(56) References cited:
- US-A- 5 974 496
- WEEKS M ET AL: "Improved multimedia server I/O subsystems" EUROMICRO CONFERENCE, 1998. PROCEEDINGS. 24TH VASTERAS, SWEDEN 25-27 AUG. 1998, LOS ALAMITOS, CA, USA,IEEE COMPUT. SOC, US, 25 August 1998 (1998-08-25), pages 514-519, XP010297981 ISBN: 0-8186-8646-4
- CHAME A: "PCI bus in high speed I/O systems applications" AEROSPACE CONFERENCE, 1998 IEEE SNOWMASS AT ASPEN, CO, USA 21-28 MARCH 1998, NEW YORK, NY, USA,IEEE, US, 21 March 1998 (1998-03-21), pages 505-514, XP010286942 ISBN: 0-7803-4311-5
- HENRY D S ; JOERG C F: "A tightly-coupled processor-network interface" FIFTH INTERANTIONAL CONFERENCE ON ARCHITECTURAL SUPPORT FOR PROGRAMMING LANGUAGES AND OPERATING SYSTEMS (ASPLOS-V), [Online] vol. 27, no. 9, 12 - 15 October 1992, pages 111-122, XP002244857 Boston, USA Retrieved from the Internet: <URL:http://citeseer.nj.nec.com/cache/pape rs/cs/1284/ftp:zSzzSzcsg-ftp.lcs.mit.eduzS zpubzSzpaperszSzcsgmemozSzmemo-342.pdf/hen ry92tightlycoupled.pdf> [retrieved on 2003-06-18]

## Description

### BACKGROUND OF THE INVENTION

### 1. Field of the Invention

The present invention relates generally to microprocessors, and more particularly, to methods and systems for microprocessors to serve data from memory systems.

### 2. Description of the Related Art

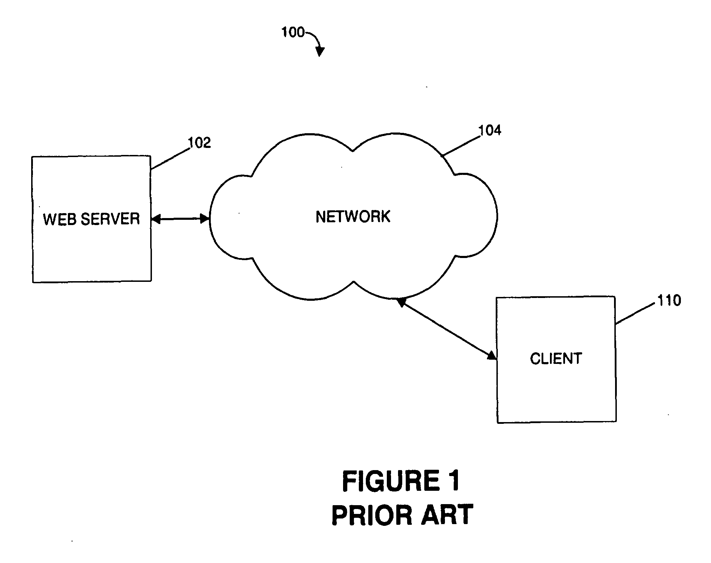

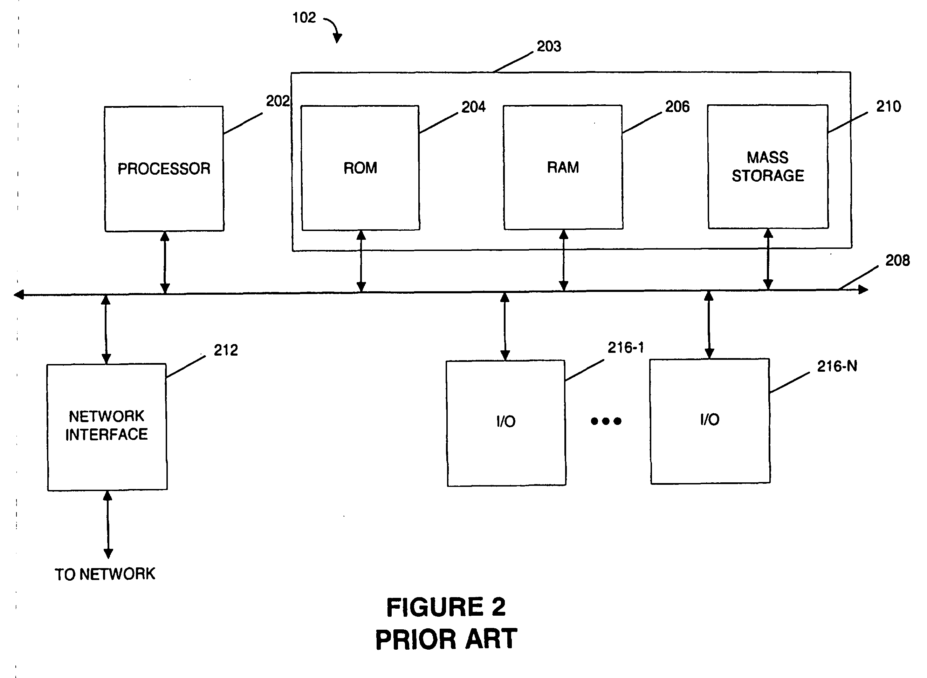

A typical server computer, such as a web server, has one main memory. A server serves data from the memory to a client computer that requested the data. Figure 1 shows a typical web server 102 and client computer 110 that are linked by a network 104, such as the Internet or other network. Figure 2 is a high-level block diagram of a typical web server 102. As shown, the web server 102 includes a processor 202, a memory system 203 that includes a ROM 204, a main memory DRAM 206 and a mass storage device 210, each connected by a peripheral bus system 208. The peripheral bus system 208 may include one or more buses connected to each other through various bridges, controllers and/or adapters, such as are well known in the art. For example, the peripheral bus system 208 may include a "system bus" that is connected through an adapter to one or more expansion buses, such as a Peripheral Component Interconnect (PCI) bus. Also coupled to the peripheral bus system 208 are a network interface 212, a number (N) of input/output (I/O) devices 216-1 through 216-N and a peripheral cryptographic processor 220.

I/O devices 216-1 through 216-N may include, for example, a keyboard, a pointing device, a display device and/or other conventional I/O devices. Mass storage device 210 may include any suitable device for storing large volumes of data, such as a magnetic disk or tape, magneto-optical (MO) storage device, or any of various types of Digital Versatile Disk (DVD) or Compact Disk (CD) based storage.

Network interface 212 provides data communication between the computer system and other computer systems on the network 104. Hence, network interface 212 may be any device suitable for or enabling the web server 102 to communicate data with a remote processing system (e.g., client computer 110) over a data communication link, such as a conventional telephone modem, an Integrated Services Digital Network (ISDN) adapter, a Digital Subscriber Line (DSL) adapter, a cable modem, a satellite transceiver, an Ethernet adapter, or the like.

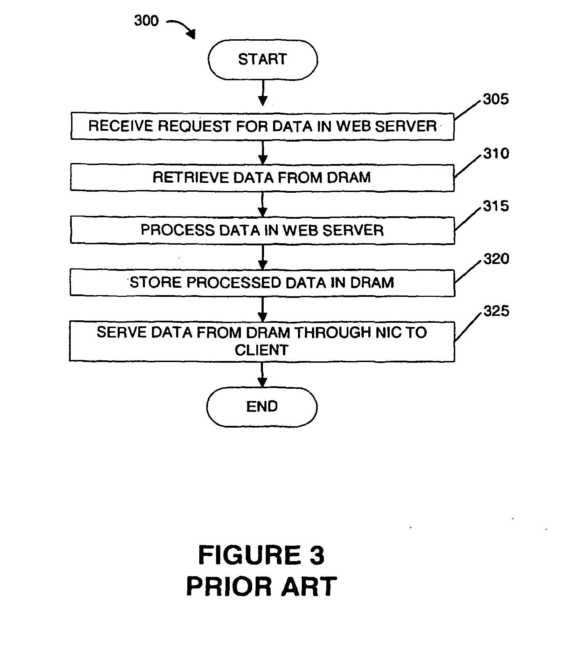

The web server 102 typically processes large quantities of data, for example, streaming data such as streaming video or streaming audio or other types of data or serving a website and other web data. Figure 3 is a flowchart of the method operations 300 of the web server 102 serving a large volume of data such as a 10 MB data stream. In operation 305, the web server 102 receives a request for the 10 MB data stream from the client 110. If the 10 MB data stream required processing such as being encrypted, then the 10 MB data stream must first be retrieved from the DRAM 206 into the processor 202. In operation 310, the data stream is retrieved from the DRAM 206 and/or other portions of the memory system 203.

In operation 315, the data stream is processed in the processor 202. In operation 320, the processed data stream is stored in the DRAM 206. In operation 325, the data stream is served through the network interface 212 to the network 104 to the client 110.

The processed data stream must be stored in the memory system 203 because the processor 202 and the network interface 212 typically have different data processing rates. By way of example, the processor 202 can process data at a rate of about 2 GHz or even greater. The peripheral bus system 208 typically operates at about 166 MHz, therefore the network interface 212 typically does not operates as fast as 2 GHz and cannot serve the data as fast as the processor can process the data. As a result the processed data must be temporarily stored in the memory system 203 so that the network interface 212 can serve the processed data at the optimal rate for the network interface 212. Alternatively, the network interface 212 may be able to output data faster than the processor can process the data, therefore, the processed data can be built up in the memory system 203 and the network interface 203 can serve the data from the memory system 203 at a high rate.

Now, as described in Figure 3 above, the 10 MB data stream must transfer across the peripheral bus system 208 between the DRAM 206 and the processor 202 three times. Therefore, a 10 MB data stream being served results in a 30 MB data stream flowing between the DRAM 206 and the processor 202. These multiple passes between the DRAM 206 and the processor 202 consume large portion of the total I/O bandwidth of the processor 202 I/O which can limit the ability of the processor 202 to perform other operations besides serving the 10 MB data stream.

What is needed is a system and method to reduce the bandwidth usage of the processor to memory system interface.
The technical publication "A Tightly-Coupled Processor-Network Interface" by D.S. Henry and C.F. Iberg, October 1992, discloses the use of the cache bus for direct data transfer between the processor and a network interface.

### SUMMARY OF THE INVENTION

Broadly speaking, the present invention fills these needs by providing a system and method for caching DRAM to reduce the bandwidth usage of the processor to memory system interface. It should be appreciated that the present invention can be implemented in numerous ways, including as a process, an apparatus, a system, computer readable media, or a device. Several inventive embodiments of the present invention are described below.

One embodiment includes a server that includes a processor and a memory system coupled that are coupled to a first bus system. A network interface is coupled to the processor and an egress buffer is coupled to the processor and the network interface by a second dedicated egress bus.

The processor can also include multiple processors. The multiple processors can be included on a first die or chip. Alternatively, the multiple processors can be included on multiple separate dies or chips.

The egress buffer can include a high-speed random access memory. In one embodiment, the egress buffer includes random access memory that has an operating speed of about 400 MHz.

The egress buffer and the egress bus can have a data throughput rate that is greater than or equal to about twice the amount of a data stream to be served.

The egress buffer can also include a double data rate buffer.

The egress bus has a bandwidth that is greater than or equal to about twice the amount of a data stream to be served. The egress bus can also include a 32-bit data bus.

One embodiment includes a method of serving data that includes receiving a request for data in a processor in a server, the processor being coupled to a first bus system. The requested data is retrieved. The retrieved data is processed in the processor. The processed data is stored in an egress buffer that is coupled to the processor and a network interface. The stored data is served from the egress buffer through the network interface.

The egress buffer is coupled to the processor and the network interface by a second dedicated egress bus.

The requested data can include a data stream.

The egress bus has a bandwidth of about twice a bandwidth of the data stream.

The egress bus can include a 32-bit data bus.

The processed data can be stored in the egress buffer substantially simultaneously with the stored data being served from the egress buffer.

Processing the retrieved data in the processor can also include formatting the data, encrypting the data, and decrypting the data among other processes.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, and like reference numerals designate like structural elements.

Figure 1 shows a typical web server and client computer that are linked by a network, such as the Internet or other network.

Figure 2 is a high-level block diagram of a typical web server.

Figure 3 is a flowchart of the method operations of the web server serving a large volume of data such as a 10 MB data stream.

Figure 4 shows a block diagram of a server in accordance with one embodiment of the present invention.

Figure 5 is a flow chart of the method operations of serving data using an egress buffer in accordance with one embodiment of the present invention.

Figure 6 shows a block diagram of a processor according to one embodiment of the present invention.

### DETAILED DESCRIPTION OF THE EXEMPLARY EMBODIMENTS

Several exemplary embodiments for caching DRAM to reduce the bandwidth usage of the processor to memory system interface will now be described. It will be apparent to those skilled in the art that the present invention may be practiced without some or all of the specific details set forth herein.

One embodiment of the present invention includes an egress buffer that can be used to temporarily store processed data from the processor that will be served by the network interface. The egress buffer thereby reduces the demand on the bandwidth usage of the processor to memory system interface by about two-thirds.

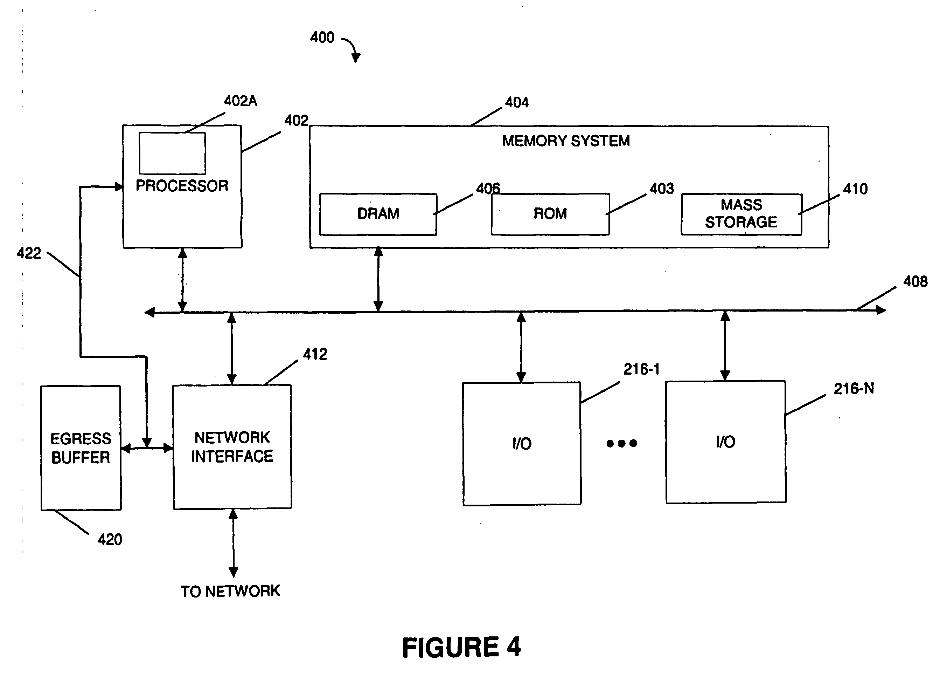

Figure 4 shows a block diagram of a server 400 in accordance with one embodiment of the present invention. The server 400 can be a web server or other type of server. The server 400 includes a bus system 408 that couples a processor 402 and a memory system 404. The processor 402 includes at least one processor core 402A. The server 400 also includes an egress buffer 420 that is coupled to the processor 402 and a network interface 412.

The egress buffer 420 is coupled to the processor 402 and the network interface 412 via a dedicated egress bus 422. The egress bus 422 can be as wide as necessary, for example, the egress bus 422 can be 32-bits (i.e., lines) wide but the egress bus 422 could be narrower or wider such as 16-bits or 64-bits. The egress buffer 420 can be large enough to buffer the desired data throughput of the network interface 412 as will be described in more detail below. Referring to the above example of a 10 gigabit data throughput, the egress buffer 420 would need to be 32 megabytes or possibly larger.

In one embodiment, the egress buffer 420 includes a very high-speed ram such as a fast cycle time RAM (FCRAM) that operates as fast as about 400 MHz or more. The FCRAM allows the egress buffer 420 to serve the data across the egress bus 422 to the network interface 412 at the speed of the network interface 412.

In one embodiment, the server 400 can include multiple processors on multiple processor chips or dies. The egress bus 422 can also couple a single egress buffer 420 to all of the multiple processors. An egress bus controller can be included to manage the data flow between the multiple processors and the egress buffer 420.

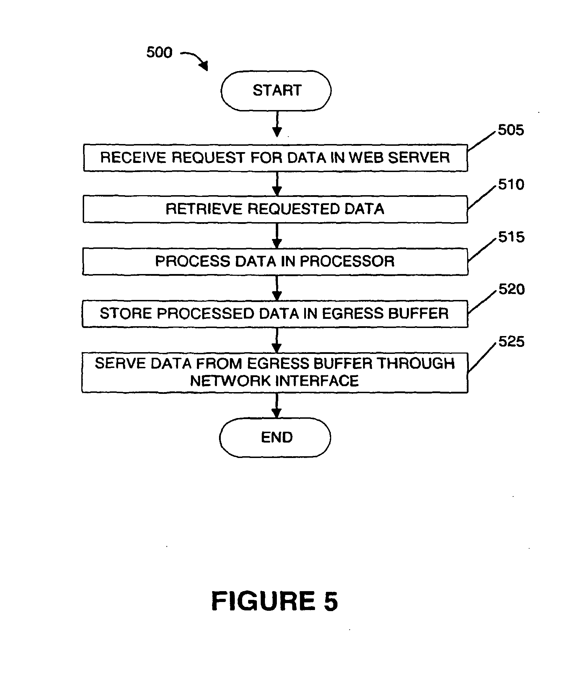

Figure 5 is a flow chart of the method operations 500 of serving data using an egress buffer in accordance with one embodiment of the present invention. In operation 505, a request for data is received in the server 400. The request can be from an application within the server 400 or due to a request received from an external data requestor, such as a client computer 110 in Figure 1 that is linked to the server 400 by a network.

The processor 402 retrieves the requested data, in operation 510. The data can be retrieved from numerous sources such as from the memory system 404 or other sources via the system data bus 408. In operation 515, the processor 402 processes the retrieved data such as packetizing the data or performing some other formatting, encryption, decryption, or other processing to the retrieved data.

The processed data is stored in the egress buffer 420 via the egress bus 422, in operation 520. In operation 525, the network interface 412, 412' retrieves the processed data from the egress buffer 420, via the egress bus 422 and serves the data to the data requestor.

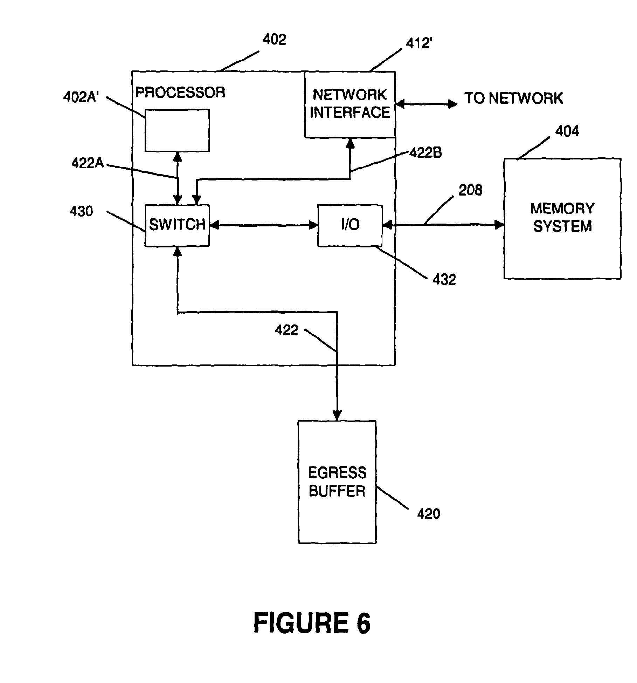

Figure 6 shows a block diagram of a processor 402' according to one embodiment of the present invention. The processor 402' includes a processor core 402A' and an integrated network interface 412'. Because the integrated network interface 412' is included on the processor die 402' with the processor core 402A', the network interface 412' can output data faster than the network interface 412 described in Figure 4 above.

In one embodiment, a dedicated bus 422A couples the processor core 402A' to the dedicated egress bus 422, through a process data switch 430. The process data switch 430 is also coupled to the network interface 412' via a bus 422B. Alternatively, the network interface 412' can be coupled to the egress buffer 420 by a separate, dedicated bus. The process data switch 430 directs the data from the processor core 402A' to the egress buffer 420 or the memory system 404 and controls the data flow across the egress bus 422 so that the data flows either to the network interface 412'or from the processor core 402A'.

In alternative embodiments, the egress bus 422 can also link other components on the processor die to the egress buffer 420.

In one embodiment, the egress buffer 420 is an about 400 MHz, double data rate (DDR) buffer. When combined with a 32-bit wide egress bus 422, a 400 MHz DDR buffer produces 800 MHz X 32-bit wide egress bus 422 to produce 3.2 GB per second throughput with a relatively small actual buffer of only two or four bits per 32-bit lines of the egress bus 422. 3.2 GB per second throughput of the egress bus 422 and egress buffer 420 equates to slightly more than 24 gigabits per second. A 24 gigabit per second egress buffer 420 can support two 10-gigabit-per-second data streams: A first 10 gigabit data stream is input to the egress buffer 420 while a second 10 gigabit data stream output from the egress buffer 420 to the network interface 412, 412'. The speed of the egress buffer 420 memory must be sufficient to support the network interface 412, 412' data demand rate.

The egress buffer 420

Because the egress buffer 420 is coupled to the processor core 402A' by the dedicated egress bus 422, the egress bus 422 can deliver the data much quicker than a shared data bus such as the I/O interface 432 between the memory system 404 and the processor core 402A'. Further, because the egress buffer 420 uses much higher speed type RAM (e.g., FCRAM), the egress buffer 420 can serve the data faster than standard DRAM.

The egress buffer 420 can also substantially smooth out the data interface between the data processing rate of the processor core 402A and the rate the network interface 412 can serve the data. Often the difference in processing rates (i.e., the transient variation) can vary as the processor performs other operations or the network is busy and reduces the rate the network interface 412 can serve the data. The amount of transient variation increases as the size of the egress buffer 420 increases.

The egress buffer 420 FCRAM can operate in any range from about 100 MHz or even slower to about 400 MHz or greater. The higher speed of the egress buffer 420, the greater the efficiency of the processor serving the data to the network interface. Alternatively, lower speed egress buffer 420 FCRAM would also increase the efficiency by reducing the demand across the system bus 408 and specifically across the interface between the memory system 404 and the processor 402.

The egress buffer 420 could be within a single die or chip with the processor 402. However, typically the egress buffer 420 would not be part of the processor die because of the physical size of the memory is relatively large as compared to the size of the microprocessor devices in the processor 402 and therefore including the egress buffer is not an efficient use of the space on processor die.

The network interface 412, 412' can have any bandwidth such as about a 4 gigabit per second or about a 10 gigabit per second. The network interface 412, 412' has direct access to the egress buffer 420 via the dedicated egress bus 422.

As used herein the term "about" means +/- 10%. By way of example, the phrase "about 250"-indicates a range of between 225 and 275.

With the above embodiments in mind, it should be understood that the invention might employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, or it may be a general-purpose computer selectively activated or configured by a computer program stored in the computer. In particular, various general-purpose machines may be used with computer programs written in accordance with the teachings herein, or it may be more convenient to construct a more specialized apparatus to perform the required operations.

The invention can also be embodied as computer readable code on a computer readable medium. The computer readable medium is any data storage device that can store data, which can be thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

It will be further appreciated that the instructions represented by the operations in Figure 5 are not required to be performed in the order illustrated, and that all the processing represented by the operations may not be necessary to practice the invention. Further, the processes described in Figure 5 can also be implemented in software stored in any one of or combinations of the RAM, the ROM, or the hard disk drive.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A server (400) for serving data comprising:
a processor (402) coupled to a first bus system (408);
a memory system (404) coupled to the first bus system (408);
a network interface (412) coupled to the processor (402); and
**characterised by**,
an egress buffer (420) coupled to the processor (402) and the network interface (412) by a second dedicated egress bus (422).

2. The server of claim 1, wherein the processor (402) includes a plurality of processors.

3. The server (400) of claim 2, wherein the plurality of processors are included on a first die.

4. The server (400) of claim 2, wherein the plurality of processors are included on a plurality of dies.

5. The server (400) of any one of the preceding claims, wherein the egress buffer (420) includes high speed random access memory.

6. The server (400) of any one of claims 1 to 4, wherein the egress buffer (420) includes random access memory that has an operating speed of about 400 MHZ.

7. The server (400) of any one of the preceding claims, wherein the egress buffer (420) and the egress bus (422) have a data throughput rate that is greater than or equal to about twice the amount of a data stream to be served.

8. The server (400) of any one of the preceding claims, wherein the egress buffer (420) includes a double data rate buffer.

9. A method of serving data comprising:
receiving a request for data in a processor (402) in a server (400); the processor being coupled to a first bu system;
retrieving the requested data;
processing the retrieved data in the processor (402);
**characterised by**
storing the processed data in an egress buffer (420) that is coupled to a network interface (412) and coupled to the processor (402) by a second dedicated egress bus (422); and
serving the stored data from the egress buffer (420) through the network interface (412).

10. The method of claim 9, wherein the egress buffer (420) is coupled to the network interface by the egress bus (422).

11. The method of claim 9, wherein the requested data includes a data stream.

12. The method of claim 11, wherein the egress bus (422) has a bandwidth of about twice a bandwidth of the data stream.

13. The server of claim 1 or the method of claim 11, wherein the egress bus (422) includes a 32-bit data bus.

14. The method of any one of claims 9 to 13, wherein the processed data is stored in the egress buffer (420) substantially simultaneously with the stored data being served from the egress buffer (420).

15. The method of claim 9, wherein processing the retrieved data in the processor (402) includes at least one of a group consisting of formatting the data, encrypting the data, and decrypting the data.

16. The server of claim 1 or the method of claim 11, wherein the egress bus (422) has a bandwidth that is greater than or equal to about twice the data stream to be served.

17. The method of claim 16, wherein the data stream includes at least one of a group consisting of audio and video.

## Patentansprüche

1. Server (400) zum Bereitstellen von Daten, der Folgendes umfasst:
einen Prozessor (402), der mit einem ersten Bussystem (408) gekoppelt ist;
ein Speichersystem (404), das mit dem ersten Bussystem (408) gekoppelt ist;
eine Netzwerkschnittstelle (412), die mit dem Prozessor (402) gekoppelt ist; und
**gekennzeichnet durch** einen Egress-Puffer (420), der **durch** einen zweiten dedizierten Egress-Bus (422) mit dem Prozessor (402) und der Netzwerkschnittstelle (412) gekoppelt ist.

2. Server nach Anspruch 1, wobei der Prozessor (402) eine Mehrzahl von Prozessoren beinhaltet.

3. Server (400) nach Anspruch 2, wobei die Mehrzahl von Prozessoren auf einem ersten Chip enthalten ist.

4. Server (400) nach Anspruch 2, wobei die Mehrzahl von Prozessoren auf einer Mehrzahl von Chips enthalten ist.

5. Server (400) nach einem der vorherigen Ansprüche, wobei der Egress-Puffer (420) einen schnellen Direktzugriffsspeicher aufweist.

6. Server (400) nach einem der Ansprüche 1 bis 4, wobei der Egress-Puffer (420) einen Direktzugriffsspeicher mit einer Betriebsfrequenz von etwa 400 MHz aufweist.

7. Server (400) nach einem der vorherigen Ansprüche, wobei der Egress-Puffer (420) und der Egress-Bus (422) eine Datendurchsatzrate haben, die gleich dem oder mehr als etwa das Zweifache(n) der Menge eines zu liefernden Datenstroms ist.

8. Server (400) nach einem der vorherigen Ansprüche, wobei der Egress-Puffer (420) einen Puffer mit der doppelten Datenrate aufweist.

9. Verfahren zum Bereitstellen von Daten, das die folgenden Schritte umfasst:
Empfangen einer Anforderung für Daten in einem Prozessor (402) in einem Server (400), wobei der Prozessor mit einem ersten Bussystem gekoppelt ist;
Abrufen der angeforderten Daten,
Verarbeiten der abgerufenen Daten in dem Prozessor (402);
**gekennzeichnet durch**
Speichern der verarbeiteten Daten in einem Egress-Puffer (420), der mit einer Netzwerkschnittstelle (412) gekoppelt ist und **durch** einen zweiten dedizierten Egress-Bus (422) mit dem Prozessor (402) gekoppelt ist; und
Zuführen der gespeicherten Daten von dem Egress-Puffer (420) **durch** die Netzwerkschnittstelle (412).

10. Verfahren nach Anspruch 9, bei dem der Egress-Puffer (420) durch den Egress-Bus (422) mit der Netzwerkschnittstelle gekoppelt ist.

11. Verfahren nach Anspruch 9, bei dem die angeforderten Daten einen Datenstrom beinhalten.

12. Verfahren nach Anspruch 11, bei dem der Egress-Bus (422) eine Bandbreite hat, die etwa das Zweifache einer Bandbreite des Datenstroms beträgt.

13. Server nach Anspruch 1 oder Verfahren nach Anspruch 11, wobei der Egress-Bus (422) einen 32-Bit-Datenbus beinhaltet.

14. Verfahren nach einem der Ansprüche 9 bis 13, bei dem die verarbeiteten Daten im Wesentlichen zur gleichen Zeit im Egress-Puffer (420) gespeichert werden, wie die gespeicherten Daten aus dem Egress-Puffer (420) zugeführt werden.

15. Verfahren nach Anspruch 9, wobei die Verarbeitung der abgerufenen Daten in dem Prozessor (402) wenigstens eine Tätigkeit aus einer Gruppe bestehend aus dem Formatieren der Daten, dem Verschlüsseln der Daten und dem Entschlüsseln der Daten beinhaltet.

16. Server nach Anspruch 1 oder Verfahren nach Anspruch 11, wobei der Egress-Bus (422) eine Bandbreite hat, die gleich dem oder mehr als das Zweifache(n) des zuzuführenden Datenstroms ist.

17. Verfahren nach Anspruch 16, bei dem der Datenstrom wenigstens ein Mitglied aus der Gruppe bestehend aus Audio und Video beinhaltet.

## Revendications

1. Un serveur (400) pour servir des données comprenant :
un processeur (402) couplé à un premier système de bus (408) ;
un système de mémoire (404) couplé au premier système de bus (408) ;
une interface de réseau (412) couplée au processeur (402) ; et
**caractérisé par**
une mémoire tampon de sortie (420) couplée au processeur (402) et à l'interface de réseau (412) par un deuxième bus de sortie dédié (422).

2. Le serveur selon la Revendication 1, où le processeur (402) inclut une pluralité de processeurs.

3. Le serveur (400) selon la Revendication 2, où la pluralité de processeurs est incluse sur une première puce.

4. Le serveur (400) selon la Revendication 2, où la pluralité de processeurs est incluse sur une pluralité de puces.

5. Le serveur (400) selon l'une quelconque des Revendications précédentes, où la mémoire tampon de sortie (420) inclut une mémoire à accès aléatoire haute vitesse.

6. Le serveur (400) selon l'une quelconque des Revendications 1 à 4, où la mémoire tampon de sortie (420) inclut mémoire à accès aléatoire possédant une vitesse de fonctionnement d'environ 400 MHz.

7. Le serveur (400) selon l'une quelconque des Revendications précédentes, où la mémoire tampon de sortie (420) et le bus de sortie (422) possèdent un débit de données supérieur ou égal à environ deux fois le volume d'un flux de données à servir.

8. Le serveur (400) selon l'une quelconque des Revendications précédentes, où la mémoire tampon de sortie (420) inclut un tampon à double débit de données.

9. Un procédé de service de données comprenant :
la réception d'une requête de données dans un processeur (402) dans un serveur (400) ; le processeur étant couplé à un premier système de bus ;
la récupération des données demandées ;
le traitement des données récupérées dans le processeur (402);
**caractérisé par**
le stockage des données traitées dans une mémoire tampon de sortie (420) qui est couplée à une interface de réseau (412 et couplée au processeur (402) par un deuxième bus de sortie dédié (422); et
le fait de servir les données stockées à partir de la mémoire de tampon de sortie (420) par l'intermédiaire de l'interface de réseau (412).

10. Le procédé selon la Revendication 9, où la mémoire tampon de sortie (420) est couplée à l'interface de réseau par le bus de sortie (422).

11. Le procédé selon la Revendication 9, où les données demandées incluent un flux de données.

12. Le procédé selon la Revendication 11, où le bus de sortie (422) possède une bande passante d'environ le double de celle du flux de données.

13. Le serveur selon la Revendication 1 ou le procédé selon la Revendication 11, où le bus de sortie (422) inclut un bus de données de 32 bits.

14. Le procédé selon l'une quelconque des Revendications 9 à 13, où les données traitées sont stockées dans la mémoire tampon de sortie (420) d'une manière substantiellement simultanée avec le fait de servir des données stockées à partir de la mémoire tampon de sortie (420).

15. Le procédé selon la Revendication 9, où le traitement des données récupérées dans le processeur (402) inclut au moins une opération d'un groupe comprenant la mise en forme des données, le cryptage des données et le décryptage des données.

16. Le serveur selon la Revendication 1 ou le procédé selon la Revendication 11, où le bus de sortie (422) possède une bande passante supérieure ou égale à environ le double de celle du flux de données à servir.

17. Le procédé selon la Revendication 16, où le flux de données inclut au moins un type de données d'un groupe composé de données audio et de données vidéo.
